# EUROPÄISCHE PATENTANMELDUNG

(11) **EP 1 729 041 A2**
(43) Veröffentlichungstag der Anmeldung: **06.12.2006**
(21) Anmeldenummer: 06010161.5
(22) Anmeldetag: 17.05.2006
(51) Int. Cl.: F16H 61/28, F16H 63/20

(54) **Verfahren und Vorrichtung zur Steuerung eines Getriebeschaltmechanismus**

(30) Priorität: 02.06.2005 DE 102005025267
(71) Anmelder: LuK Lamellen und Kupplungsbau Beteiligungs KG, 77815 Bühl (DE)
(72) Erfinder: Lein, Lars, 3613 Kongsberg (NO); Royland, Jan Gunnar, 3610 Kongsberg (NO); Gjerpe, Ole Andre, 3610 Kongsberg (NO); Svenkerud, Christer, 3611 Kongsberg (NO); Waerp, Ole Jonny, 3617 Kongsberg (DE); Norum, Viggo L., 3612 Kongsberg (NO)

(57) **Zusammenfassung**

Bei einem Verfahren zur Steuerung eines Getriebeschaltmechanismus, welcher Getriebeschaltmechanismus wenigstens ein Schaltglied (111), ein Ausrückglied (113,116), einen Schaltaktor (36,38) und einen Wählaktor (32,34) enthält, wobei das Schaltglied mittels des Wählaktors längs einer Wählgasse bewegbar ist und aus der Wählgasse an voneinander beabstandeten Stellen mittels des
Schaltaktors in Schaltgassen (S₁,S₂,S₃) zum Einlegen eines Ganges bewegbar ist und das Ausrückglied derart mit dem Schaltglied gekuppelt ist, dass es beim Einlegen eines neuen Gangs einen vorher eingelegten Gang auslegt, wird das Schaltglied nach dem Einlegen eines Ganges vom Schaltaktor in Richtung auf die Wählgasse in eine Ruhestellung kurz vor der Mündung der Schaltgasse in die Wählgasse bewegt, in der es bleibt, bis es zum Einlegen eines neuen Gangs bewegt wird.

## Beschreibung

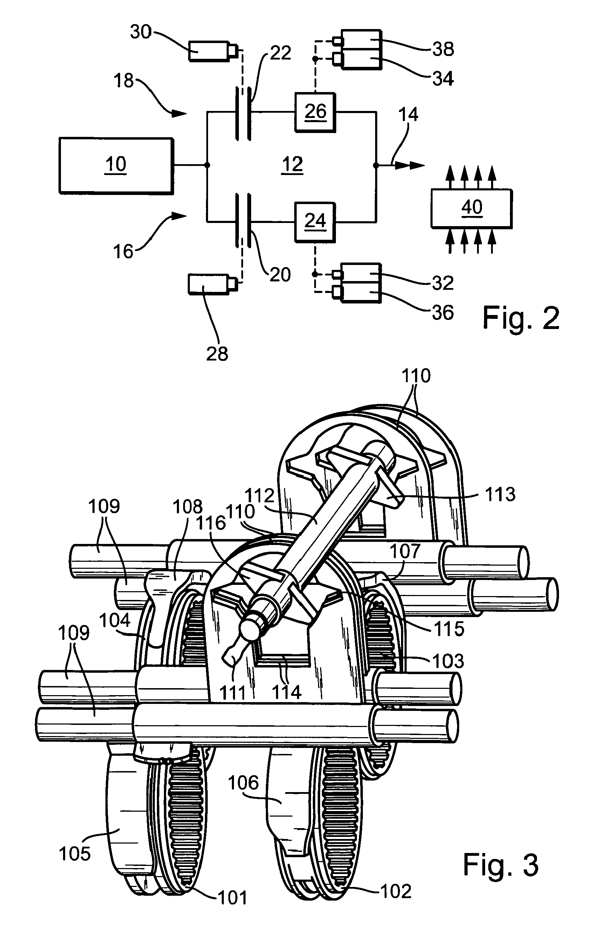

In modernen Kraftfahrzeugen werden zunehmend automatisierte oder von Aktoren betätigte einzelne Gänge schaltende Getriebe eingesetzt, da mit ihnen gegenüber Handschaltgetrieben nicht nur ein Komfortgewinn, sondern auch Verbrauchsvorteile erzielt werden. Besonderes Interesse haben so genannte Doppelkupplungs- bzw. Parallelschaltgetriebe gewonnen, wie sie beispielsweise in Fig. 3 dargestellt sind:

Gemäß Fig. 2 ist ein Antriebsmotor 10, normalerweise eine Brennkraftmaschine, über ein insgesamt mit 12 bezeichnetes Doppelkupplungsgetriebe mit einer Antriebswelle 14 verbunden, die zu angetriebenen Rädern eines Fahrzeugs führt. Das Doppelkupplungsgetriebe 12 weist zwei parallel zueinander angeordnete Teilgetriebe 16 und 18 mit je einer Kupplung 20 bzw. 22 und einem Schaltgetriebe 24, 26 auf. Zur Betätigung jeder der Kupplungen ist ein Kupplungsaktor 28 bzw. 30 vorgesehen. Die Teilgetriebe 24, 26 werden von jeweils einem Wählaktor 30 bzw. 32 und einem Schaltaktor 36 bzw. 38 betätigt. Vorteilhafterweise ist für beide Schaltgetriebe ein gemeinsamer Wählaktor und Schaltaktor vorgesehen. Zur Steuerung der Aktoren dient ein elektronisches Steuergerät 40, dessen Eingängen für die Betätigung der Kupplungen und die Schaltungen der Getriebe relevante Parameter zugeführt werden.

Aufbau und Funktion eines solchen Doppelkupplungsgetriebes sowie der dafür vorgesehenen Steuereinrichtung sind an sich bekannt und werden daher nicht im Einzelnen erläutert. Die Schaltgetriebe 24 und 26 wirken derart zusammen, dass jeweils einer von aufeinander folgenden Gängen von einem der Getriebe geschaltet wird, beispielsweise die geradzahligen Gänge von einem Getriebe und die ungeradzahligen Gänge von dem anderen Getriebe geschaltet werden, wobei einem der Getriebe zusätzlich ein Rückwärtsgang zugeordnet ist.

Ein Mechanismus zum Schalten eines Doppelkupplungsgetriebes ist beispielsweise in der DE 102 06 561 A1 beschrieben, der die Figuren 3 und 4 entnommen sind.

Gemäß Fig. 3 enthält einen Getriebebetätigungsmechanismus zur Betätigung der beiden Teilgetriebe 24 und 26 des Doppelkupplungsgetriebes 12 der Fig. 3, das dahingehend modifiziert ist, dass für beide Teilgetriebe nur ein gemeinsamer Wählaktor und ein gemeinsamer Schaltaktor vorgesehen ist, vier Kupplungsmuffen 101, 102, 103 und 104, die jeweils mit einer Schaltgabel 105, 106, 107 und 108 verbunden ist. Eine Gruppe von Gängen bzw. die Gänge eines der Teilgetriebe 24 und 26 wird mittels der Kupplungsmuffen 101 und 104 betätigt, die andere Gruppe von Gängen wird mittels der Kupplungsmuffen 102 und 103 betätigt. Ein erster Schaltfinger 111, der ein Schaltglied bildet, und ein in Fig. 4 nicht sichtbarer weiterer Schaltfinger dienen zum Einlegen von Gängen. Als Doppelnocken 113 und 116 ausgebildete Ausrückglieder stellen dabei sicher, dass beim Einlegen eines Ganges eines Teilgetriebes alle anderen Gänge dieses Teilgetriebes ausgelegt sind. Die Schaltgabeln 105, 106, 107 und 108 sind auf Wellen 109 axial verschiebbar angeordnet; ihre Schaltgabelmäuler sind so ausgebildet, dass sie jeweils mit einem Schaltfinger 111 oder einem Doppelnocken 113, 116 kuppelbar sind. Dazu sind erste Teilbereiche 114 zum Kuppeln mit einem Schaltfinger 111 und zweite Teilbereiche 115 zum Kuppeln mit einem Doppelnocken 113 ausgebildet. Zum Einlegen eines Ganges tritt beispielsweise der Schaltfinger 111 mit dem Endbereich 110 der entsprechenden Schaltgabel 105 oder 106 in Verbindung, indem die Schaltwelle 112 in axialer Richtung verschoben wird. Zugleich tritt der Doppelnocken 113 jeweils mit der entsprechenden Schaltgabel 107 oder 108 in Verbindung, die zur selben Gruppe von Gängen bzw. zum selben Teilgetriebe gehört. Eine Drehung der Schaltwelle 112 verschwenkt den Schaltfinger 111, wodurch die Schaltgabel 105 bzw. 106 auf der Welle 109 und somit auch die zugehörige Kupplungsmuffe 101 oder 102 verschoben wird und der entsprechende Gang eingelegt wird. Zugleich bewirkt die Verdrehung des Doppelnockens 113 ein Auslegen des bisher eingelegten Ganges desselben Getriebes, wenn dieser einer anderen Schaltgasse zugeordnet war.

Handelt es sich nicht um ein Doppelkupplungsgetriebe, sondern um ein herkömmliches Getriebe mit nur einer Kupplung und einem Getriebestrang, so treten jeweils als Ausrückglieder wirkende Doppelnocken mit allen weiteren Schaltgabelmäulern in Verbindung, so dass gewährleistet ist, dass beim Einlegen eines neuen Gangs ein bisher eingelegter Gang ausgelegt wird. Bei einem Doppelkupplungsgetriebe gestattet der Mechanismus das Einlegen eines neuen Gangs bei gleichzeitigem oder kurz zuvor erfolgendem Auslegen des bisherigen Gangs des jeweiligen Teilgetriebes, wobei der im anderen Teilgetriebe eingelegte Gang von einem Gangwechsel in dem gerade geschalteten Teilgetriebe unbeeinflusst bleibt.

Die Schaltwelle 112 weist im Allgemeinen einen in Fig. 4 nicht dargestellten Ansatz auf, mit dem ihre axiale Verschiebbarkeit, auf einen engen Winkelbereich begrenzt ist, in dem der Schaltfinger 111 im dargestellten Beispiel etwa senkrecht steht und die Enden der Doppelnocken 113, 116 mit entsprechenden Ausschnitten in Endbereichen 110 der Schaltgabeln fluchten. Eine Verdrehbarkeit der Schaltwelle 112 aus der Drehstellung mit senkrechtem Schaltfinger 111 zum Einlegen eines Ganges durch Verschieben einer der Schaltgabeln längs der Wellen 109 in die eine oder andere Richtung ist nur bei vorbestimmter axialer Stellung der Schaltwelle 112 möglich. Diese begrenzte Verstellbarkeit der Schaltwelle 112 kann dadurch bewirkt werden, dass der fest mit der Schaltwelle 112 verbundener Ansatz in eine Schablone eingreift, in der bei einem Fünfganggetriebe mit Rückwärtsgang beispielsweise das Muster gemäß Fig. 4 ausgespart ist.

In der Darstellung gemäß Fig. 4 ist W als Wählgasse bezeichnet. S₁ bis S₃ bezeichnen Schaltgassen, in denen die Gänge R, I; II, III und IV, V liegen. Die Schaltwelle 112 (Fig. 3 ist mittels eines Wählaktors, beispielsweise des Wählaktors 32 der Fig. 2, in Richtung der Wählgasse W bewegbar und mittels eines Schaltaktors, beispielsweise des Schaltaktors 36, um ihre Längsachse verdrehbar, sofern sich der Schaltfinger in einer der Schaltgassen S₁, S₂ oder S₃ befindet.

Die Position des Schaltfingers und der weiteren, mit der Schaltwelle 112 starr verbundenen Elemente ist im Steuergerät 40 in an sich bekannter Weise beispielsweise dadurch bekannt, dass jedem der Aktoren 32 und 36 ein Inkrementzähler zugeordnet ist, der eine Veränderung der Stellung der Schaltwelle in Wähl- bzw. in Schaltrichtung erfasst. Durch Referenzieren der Zählstände an bestimmten Anschlägen, beispielsweise einem Endanschlag am Ende der Wählgasse W und einem Endanschlag am Ende einer der Schaltgassen, ist die Absolutstellung der Schaltwelle 112 hinsichtlich der Wähl- und der Schaltbetätigung jeweils bekannt.

Um die Funktionssicherheit des Getriebes zu überprüfen, ist es zweckmäßig, wie anhand der Fig. 4 beim Einlegen des zweiten Gangs dargestellt, beim oder unmittelbar nach dem Einlegen eines Ganges einen Endanschlag S_{II} der Schaltgasse S₂ anzufahren und das Erreichen dieses Endanschlags im Steuergerät 40 zu verifizieren. Weiter wird beim Erreichen des Endanschlags S_{II} vorteilhafterweise einer der Seitenränder R₁, R₂ der Schaltgasse S₂ angefahren, um die entsprechende Stellung der Schaltwelle zu verifizieren. Nach Anfahren des Anschlags S_{II} und eines der Ränder R₁ bzw. R₂ ist die einwandfreie Funktion des Schaltmechanismus gewährleistet und weiter gewährleistet, dass der zweite Gang eingelegt ist.

Eine Eigenart der geschilderten Vorgehensweise liegt darin, dass das Schaltglied bzw. der Schaltfinger im dargestellten Beispiel der Fig. 4 bei eingelegtem zweiten Gang sich in der mit P_{II} bezeichneten Position befindet und in dieser Position verbleibt, solange kein neuer Gang angefordert wird. Wenn ein neuer Gang, beispielsweise der fünfte Gang angefordert wird, muss das Schaltglied von der Position P_{II} aus der Schaltgasse S₂ heraus in die Wählgasse W, dann längs der Wählgasse W zur Schaltgasse S₃ und dann in der Schaltgasse S₃ in die Position Pᵥ bewegt werden. Dieser lange Weg ist naturgemäß mit einer relativ langen Zeitdauer verbunden, die von der Anforderung des Einlegens des fünften Gangs bis zum tatsächlichen Einlegen des fünften Gangs vergeht.

Der Erfindung liegt die Aufgabe zugrunde, ein Verfahren und eine Vorrichtung zur Steuerung eines Getriebeschaltmechanismus zu schaffen, das bzw. die einen raschen Gangwechsel ermöglicht.

Der auf das Verfahren gerichtete Teil der vorgenannten Aufgabe wird mit einem Verfahren zur Steuerung eines Getriebeschaltmechanismus gelöst, welcher Getriebeschaltmechanismus wenigstens ein Schaltglied, ein Ausrückglied, einen Schaltaktor und einen Wählaktor enthält, wobei das Schaltglied mittels des Wählaktors längs einer Wählgasse bewegbar ist und aus der Wählgasse an voneinander beabstandeten Stellen mittels des Schaltaktors in Schaltgassen zum Einlegen eines Ganges bewegbar ist und das Ausrückglied derart mit dem Schaltglied gekuppelt ist, dass es beim Einlegen eines neuen Gangs einen vorher eingelegten Gang auslegt, und wobei weiterhin das Schaltglied nach dem Einlegen eines Ganges vom Schaltaktor in Richtung auf die Wählgasse in eine Ruhestellung kurz vor der Mündung der Schaltgasse in die Wählgasse bewegt wird, in der es bleibt, bis es zum Einlegen eines neuen Gangs bewegt wird.

Um ein hohes Maß an Betriebssicherheit zur erreichen, wird das Schaltglied vorteilhafterweise vom Schaltaktor bei oder unmittelbar nach dem Einlegen eines Ganges durch weitere Bewegung gegen einen Endanschlag am Ende der zu dem eingelegten Gang gehörenden Schaltgasse bewegt und nach Erreichen der Ruhestellung vom Wählaktor gegen einen Seitenrand der Schaltgasse bewegt.

Der auf die Vorrichtung gerichtete Teil der Erfindungsaufgabe wird mit einer Vorrichtung zur Steuerung eines Getriebeschaltmechanismus gelöst, welcher Getriebeschaltmechanismus wenigstens ein Schaltglied 111, ein Ausrückglied 113, 116 und einen Wählaktor 32, 34, einen Schaltaktor 36, 38 enthält, wobei das Schaltglied mittels des Wählaktors längs einer Wählgasse bewegbar ist und aus der Wählgasse an voneinander beabstandeten Stellen mittels des Schaltaktors in Schaltgassen S₁, S₂, S₃ zum Einlegen eines Ganges bewegbar ist und das Ausrückglied derart mit dem Schaltglied gekuppelt ist, dass es beim Einlegen eines neuen Gangs einen vorher eingelegten Gang auslegt, welche Vorrichtung Sensoren zum Erfassen der Stellung des Schaltgliedes und ein Steuergerät 40 zum Steuern des Wählaktors und des Schaltaktors enthält, dadurch gekennzeichnet, dass das Steuergerät 40 den Wählaktor 32, 34 und den Schaltaktor 36, 38 zur Durchführung des Verfahrens steuert.

Die Erfindung ist bei allen Gangschaltgetrieben einsetzbar, bei denen ein das Einlegen eines Ganges bewirkendes Schaltglied nach dem Einlegen des Ganges in der Schaltgasse in eine Stellung zurückbewegt werden kann, in der es die Wählgasse zumindest annähernd erreicht, ohne dass dies zu einem Auslegen des Gangs führt. Das Auslegen des Gangs kann durch das bei einem weiteren Bewegen des Schaltgliedes durch das dann als Ausrückglied wirkende Schaltglied selbst bewirkt werden, oder, wie bei dem anhand der Fig. 3 geschilderten Schaltmechanismus, durch ein gesondertes Ausrückglied, das mit dem Schaltglied vorteilhafterweise starr verbunden ist. Ein Mechanismus, wie beispielsweise der der Fig. 2 wird auch als "Active Interlock" Mechanismus bezeichnet. Er stellt sicher, dass jeweils nur ein Gang eines Getriebes bzw. eines Teilgetriebes bei einem Doppelkupplungsgetriebe eingelegt sein kann.

Die Erfindung wird im folgenden anhand schematischer Zeichnungen beispielsweise und mit weiteren Einzelheiten erläutert.

Es stellen dar:
- Fig. 1: ein an sich bekanntes Schaltschema eines Getriebes mit drei Schaltgassen und einer Wählgasse zur Erläuterung des Funktionsablaufes eines erfindungsgemäßen Verfahrens,
- Fig. 2: ein in seinem Grundaufbau an sich bekanntes Doppelkupplungsgetriebe,
- Fig. 3: einen Schaltmechanismus zum Betätigen beispielsweise eines Doppelkupplungsgetriebes mit "Active Interlock" Funktion und
- Fig. 4: ein der Fig. 1 entsprechendes Schaltschema.

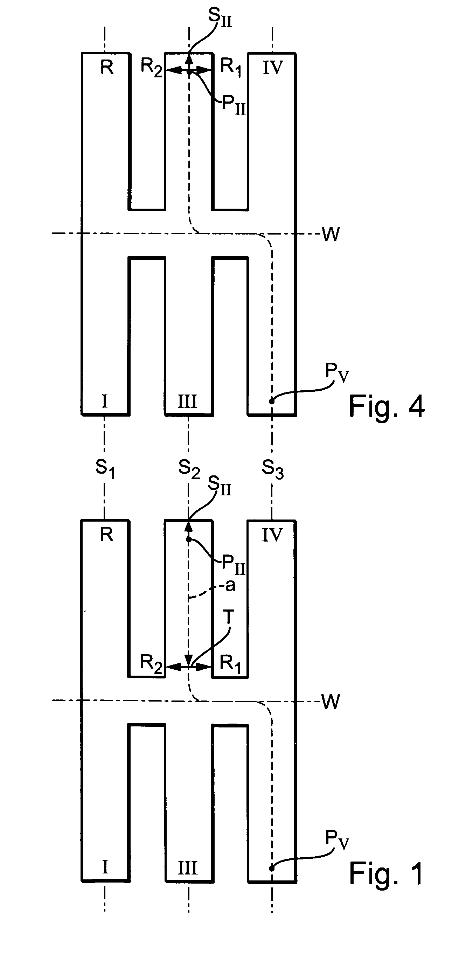

Bei der vorliegenden Erläuterung der Fig. 1 wird auf die bereits erläuterten Figuren 2 bis 4 Bezug genommen.

Sei gemäß Fig. 1 angenommen, dass der Schaltfinger, beispielsweise der Schaltfinger 111 gemäß Fig. 3 aus der Wählgasse W in die Schaltgasse S₂ zum Einlegen des zweiten Gangs in die Position P_{II} bewegt wurde. Unmittelbar nach dem Einlegen des zweiten Gangs, der im Allgemeinen bereits kurz vor Erreichen des Endanschlags S_{II} der Schaltgasse S₂ erreicht wird, wird durch Steuerung des Schaltaktors mittels des Steuergerätes 40 die Schaltwelle 112 derart bewegt, dass ein mit ihr verbundenes, die Schablone gemäß Fig. 1 abtastendes Bauteil gegen den Anschlag S_{II} bewegt wird oder die betätigte Schaltgabel selbst einen Endanschlag erreicht. Das Erreichen dieses Anschlags wird beispielsweise durch Stromzunahme im entsprechenden Aktor oder durch gleichbleibenden Zählerstand des entsprechenden Inkrementzählers festgestellt. Wenn auf diese Weise die Funktionstüchtigkeit des Schaltaktors überprüft ist, wird der Schaltaktor unter Steuerung vom Steuergerät 40 längs der Strecke a in Richtung auf die Wählgasse W bewegt, bis die Position T nahe der Wählgasse W erreicht ist. Nach Erreichen der Position T wird der Schaltaktor außer Betrieb gesetzt und der Wählaktor betätigt, so dass das mit der Schaltwelle 112 starr verbundene Abtastbauteil gegen einen Seitenrand R₁ oder R₂ der Schaltgasse bewegt wird und auf diese Weise einerseits überprüft wird, ob sich das Schaltglied in der richtigen Schaltgasse befindet, und andererseits die Funktionstüchtigkeit des Wählaktors überprüft wird. Wenn dies geschehen ist, bleibt das Schaltglied in der Position T, bis ein neuer Gang angefordert wird. Wenn, wie im dargestellten Beispiel, als nächster Gang der vierte Gang angefordert wird, muss das Schaltglied lediglich aus der Stellung T zunächst die kurze Strecke in die Wählgasse W hineinbewegt werden, dann längs der Wählgasse W in die Schaltgasse S₃ bewegt werden und in der Schaltgasse S₃ in die Position Pᵥ bewegt werden.

Wie aus einem Vergleich der Figuren 1 und 4 unmittelbar ersichtlich, ist die Strecke von T zu P_{IV} deutlich kürzer als die Strecke von P_{II} zu Pᵥ. Die kürzere Strecke führt zu einer erheblich kürzeren Reaktions- bzw. Schaltzeit des nach dem erfindungsgemäßen Verfahren gesteuerten Schaltmechanismus.

Wenn beispielsweise die Strecke, um die das Schaltglied aus der Wählgasse heraus bis zum Erreichen eines Endanschlags der Schaltgasse bewegt werden kann, 20 mm beträgt, liegt die Position T vom Endanschlag beispielsweise 17 mm entfernt, also 2 mm vor der Mündung der Schaltgasse in die Wählgasse, wenn innerhalb der Wählgasse ein Spiel in Richtung der Schaltgassen in beide Richtungen je 1 mm besteht. Diese 17 mm oder ein etwas geringerer Betrag, wenn die Position P_{II} gemäß Fig. 4 etwas von der Anschlagsposition S_{II} entfernt ist, werden bei dem Verfahrweg, um den das Schaltglied zum Einlegen eines neuen Gangs bewegt werden muss, eingespart.

Bei dem Mechanismus gemäß Fig. 4 wird im dargestellten Beispiel der zweite Gang ausgelegt, während das Schaltglied aus der Wählgasse W in Richtung auf die Stellung Pᵥ bewegt wird.

Bei anderen Gangwechseln laufen die Vorgänge entsprechend ab, wobei bei einem Doppelkupplungsgetriebe beispielsweise, wenn vom zweiten Gang in den dritten Gang geschaltet wird und der dritte Gang bereits vorgewählt wird, dies lediglich durch ein Öffnen der einen Kupplung und ein Schließen der anderen Kupplung geschieht.

### Bezugszeichenliste

- 10: Antriebsmotor
- 12: Doppelkupplungsgetriebe
- 14: Antriebswelle
- 16: Getriebezweig
- 18: Getriebezweig
- 20: Kupplung
- 22: Kupplung
- 24: Teilgetriebe
- 26: Teilgetriebe
- 28: Kupplungsaktor
- 30: Kupplungsaktor
- 32: Wählaktor
- 34: Wählaktor
- 36: Schaltaktor
- 38: Schaltaktor
- 40: Steuergerät
- 101: Kupplungsmuffe
- 102: Kupplungsmuffe
- 103: Kupplungsmuffe
- 104: Kupplungsmuffe
- 105: Schaltgabel
- 106: Schaltgabel
- 107: Schaltgabel
- 108: Schaltgabel
- 109: Welle
- 110: Endbereich
- 111: Schaltfinger
- 112: Schaltwelle
- 113: Doppelnocken
- 114: Teilbereich
- 115: Teilbereich
- 116: Doppelnocken

## Patentansprüche

1. Verfahren zum Steuern eines Getriebeschaltmechanismus, welcher Getriebeschaltmechanismus wenigstens ein Schaltglied, ein Ausrückglied, einen Schaltaktor und einen Wählaktor enthält, wobei das Schaltglied mittels des Wählaktors längs einer Wählgasse bewegbar ist und aus der Wählgasse an voneinander beabstandeten Stellen mittels des Schaltaktors in Schaltgassen zum Einlegen eines Ganges bewegbar ist und das Ausrückglied derart mit dem Schaltglied gekuppelt ist, dass es beim Einlegen eines neuen Gangs einen vorher eingelegten Gang auslegt,
**dadurch gekennzeichnet, dass**
das Schaltglied nach dem Einlegen eines Ganges vom Schaltaktor in Richtung auf die Wählgasse in eine Ruhestellung kurz vor der Mündung der Schaltgasse in die Wählgasse bewegt wird, in der es bleibt, bis es zum Einlegen eines neuen Gangs bewegt wird.

2. Verfahren nach Anspruch 1, **dadurch gekennzeichnet, dass** das Schaltglied vom Schaltaktor bei oder unmittelbar nach dem Einlegen eines Ganges durch weitere Bewegung gegen einen Endanschlag am Ende der zu dem eingelegten Gang gehörenden Schaltgasse bewegt wird und nach Erreichen der Ruhestellung vom Wählaktor gegen einen Seitenrand der Schaltgasse bewegt wird.

3. Vorrichtung zum Steuern eines Getriebeschaltmechanismus, welcher Getriebeschaltmechanismus wenigstens ein Schaltglied (111), ein Ausrückglied (113, 116) und einen Wählaktor (32, 34), einen Schaltaktor (36, 38) enthält, wobei das Schaltglied mittels des Wählaktors längs einer Wählgasse bewegbar ist und aus der Wählgasse an voneinander beabstandeten Stellen mittels des Schaltaktors in Schaltgassen (S₁, S₂, S₃) zum Einlegen eines Ganges bewegbar ist und das Ausrückglied derart mit dem Schaltglied gekuppelt ist, dass es beim Einlegen eines neuen Gangs einen vorher eingelegten Gang auslegt, welche Vorrichtung Sensoren zum Erfassen der Stellung des Schaltgliedes und
ein Steuergerät (40) zum Steuern des Wählaktors und des Schaltaktors enthält, **dadurch gekennzeichnet, dass** das Steuergerät (40) den Wählaktor (32, 34) und den Schaltaktor (36, 38) zur Durchführung des Verfahrens nach Anspruch 1 oder 2 steuert.
